# EUROPÄISCHE PATENTSCHRIFT

(11) **EP 1 707 738 B1**
(45) Veröffentlichungstag und Bekanntmachung des Hinweises auf die Patenterteilung: **17.11.2010**
(21) Anmeldenummer: 06006153.8
(22) Anmeldetag: 24.03.2006
(51) Int. Cl.: F01C 11/00, F02C 3/055

(54) **Verbrennungskraftmaschine, insbesondere für Fahrzeuge wie Kraftfahrzeuge**
Internal combustion engine, in particular for vehicles such as automobiles
Moteur à combustion interne, en particulier pour véhicules comme par exemple automobiles

(30) Priorität: 29.03.2005 DE 202005004902 U
(43) Veröffentlichungstag der Anmeldung: 04.10.2006
(73) Patentinhaber: Mädge, Claus-Peter, 21385 Oldendorf (DE)
(72) Erfinder: Mädge, Claus-Peter, 21385 Oldendorf (DE)
(74) Vertreter: Volpert, Marcus

(56) Entgegenhaltungen:
- EP-A- 0 222 082
- WO-A-2005/080767
- WO-A1-79/01071
- WO-A1-80/00170
- WO-A1-03/076779
- WO-A2-2005/021949
- DE-A1- 4 222 087
- DE-C- 851 864
- DE-C- 864 333
- US-A- 5 605 124
- US-B1- 6 408 832

## Beschreibung

Die Erfindung bezieht sich auf eine Verbrennungskraftmaschine, insbesondere für Fahrzeuge wie Kraftfahrzeuge, nach dem Oberbegriff des Patentanspruchs 1.

Aus der DE 40 23 299 A1 ist eine gattungsgemäße Verbrennungskraftmaschine, hier Wärmekraftmaschine genannt, bekannt. Bei dieser Verbrennungskraftmaschine ist als Verdrängermaschine zur Verdichtung von Frischluft ein Drehkolbenverdichter vorgesehen. Zum Entspannen des erhitzten Gases ist als Verdrängermaschine eine Drehkolbenmaschine vorgesehen. Vom Drehkolbenverdichter führt die Frischluft zu einem Wärmetauscher, wo sie aufgeheizt wird, und von dort zur Brennkammer, wo Treibstoff zugeführt und verbrannt wird. Das aufgeheizte Rauchgas strömt zu der zweiten Drehkolbenmaschine, welche mit dem vorgenannten Wärmetauscher strömungstechnisch verbunden ist.

Anderen bekannten Verbrennungskraftmaschinen sind in US 5 605 124 A; WO 80/00170; WO 03/076 779 A; DE 851 864 C und DE 864 333 C gezeigt.

Der Erfindung liegt die Aufgabe zugrunde, eine Verbrennungskraftmaschine der eingangs erwähnten Art zu schaffen, welche vorteilhafter betreib- oder handhabbar ist.

Diese Aufgabe wird erfindungsgemäß durch eine Verbrennungskraftmaschine mit den Merkmalen des Patentanspruchs 1 gelöst.

Vorteilhafte Weiterbildungen sind Gegenstand der Unteransprüche.

Erfindungsgemäß sind der wenigstens eine Ladekompressor und der wenigstens eine Dekompressor in Form einer Zahnradpumpe oder in Form eines Schraubenkompressors ausgebildet. Derartige Kompressoren ermöglichen hohe Drehzahlen und damit aus relativ kleinen Einheiten eine große Leistung. Damit ist es möglich, die Verbrennungskraftmaschine sehr kompakt auszubilden und pro benötigter Volumeneinheit eine hohe Leistung, d.h. eine hohe Leistung bei vergleichsweise niedrigem Platzbedarf, bereitzustellen. Umgekehrt ermöglicht die Erfindung, bei einer gegebenen, zu erreichenden Leistung kleinere Einheiten vorzusehen. Letztlich ermöglichen derartige Ladekompressoren und Dekompressoren ein geringes Leistungsgewicht und niedrige Herstellungskosten. Im Übrigen werden kleinere Verschleiße an diesen Aggregaten deren Funktion nicht wesentlich beeinträchtigen.

Erfindungsgemäß sind der wenigstens eine Ladekompressor und der wenigstens eine Dekompressor miteinander derart gekoppelt, dass der wenigstens eine Dekompressor zumindest einen Teil der erzeugten Energie an den wenigstens einen Ladekompressor abgibt, wobei die Kopplung von Ladekompressor und Dekompressor elektrisch oder hydraulisch ausgebildet ist. Die von dem wenigstens einen Dekompressor erzeugte Energie übersteigt die zum Betreiben des wenigstens einen Ladekompressors erforderliche Energie, so dass der wenigstens eine Dekompressor den wenigstens einen Ladekompressor antreiben und zusätzliche Energie liefern kann. Es ist klar, dass dies zum Beispiel beim Starten der Verbrennungskraftmaschine nicht möglich ist. In dem letztgenannten Fall ist der wenigstens eine Ladekompressor anderweitig anzutreiben oder Druckluft aus anderen Quellen zur Brennkammer zu leiten.

Gemäß der Erfindung hat der wenigstens eine Ladekompressor eine kleinere Leistung als der wenigstens eine Dekompressor. Damit ist die Leistung von Ladekompressor und Dekompressor einerseits an die aufzuwendende Leistung des wenigstens einen Ladekompressors, andererseits an die zu erzeugende Leistung des wenigstens einen Dekompressors angepasst.

Gemäß einer anderen Weiterbildung der Erfindung ist zwischen den wenigstens einen Ladekompressor und die wenigstens eine Brennkammer ein Ladeluftkühler geschaltet. Dieser ermöglicht pro Volumeneinheit des komprimierten Gases einen höheren Energieinhalt, was sich günstig auf den Gesamtprozess auswirkt.

Gemäß einer anderen Weiterbildung der Erfindung erfolgt die Brennstoffzufuhr zu dem gasförmigen Medium vor dem wenigstens einen Ladekompressor. Bei dieser Weiterbildung verdichtet also der wenigstens eine Ladekompressor ein Zweiphasengemisch, nämlich ein Luft-/Brennstoffgemisch, welches dann in der Brennkammer gezündet wird. Bei dieser Weiterbildung kann eine separate, lediglich für die Brennstoffzufuhr in die Brennkammer vorgesehene Druckpumpe entfallen. Dadurch können die Herstellungskosten der erfindungsgemäßen Brennkraftmaschine reduziert sein.

Gemäß einer vorteilhaften Weiterbildung der Erfindung ist vor dem wenigstens einen Dekompressor ein Sedimentabscheider zum Abscheiden von bei der Verbrennung anfallenden festen Bestandteilen in den Rauchgasen angeordnet. Dadurch können die festen Bestandteile nicht in den wenigstens einen Dekompressor gelangen und dort auch keinen Verschleiß und keinerlei Ablagerungen herbeiführen. Feste Verbrennungsrückstände können daher bei dieser Weiterbildung nicht zu einer Beeinträchtigung des Betriebs des wenigstens einen Dekompressors führen.

Gemäß einer anderen Weiterbildung der Erfindung ist ein der Brennkammer nachgeschalteter Kühler vorgesehen, welcher vorzugsweise in den wenigstens einen Dekompressor integriert ist. Dadurch kann der wenigstens eine Dekompressor vor übermäßig hohen Betriebstemperaturen und dadurch bedingten Beeinträchtigungen geschützt sein. Die dabei entstehende Wärmemenge kann anderweitig in dem Fahrzeug nutzbar gemacht werden und damit die Gesamtenergiebilanz der erfindungsgemäßen Verbrennungskraftmaschine verbessern.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Die einzige Figur zeigt:
eine schematische Darstellung einer Verbrennungskraftmaschineinsbesondere für Fahrzeuge wie Kraftfahrzeuge.

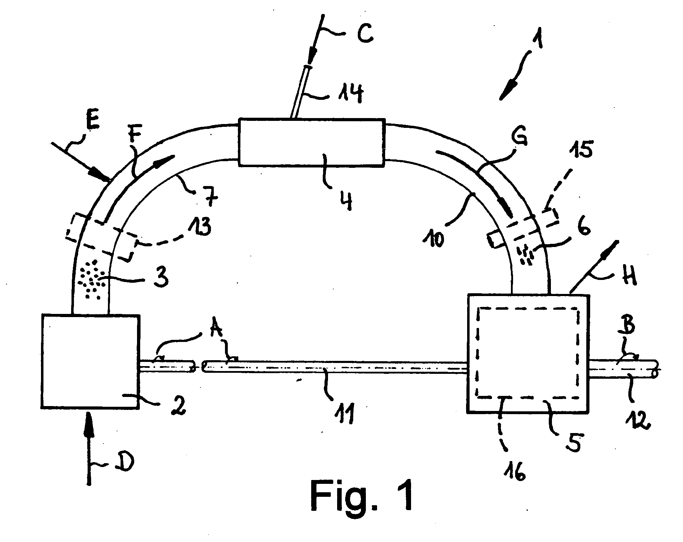

In Fig. 1 ist schematisch eine Verbrennungskraftmaschine 1 insbesondere für Fahrzeuge wie Kraftfahrzeuge (nicht näher gezeigt) dargestellt.

Die Verbrennungskraftmaschine 1 hat wenigstens einen Ladekompressor 2 zur Erhöhung des Druckes eines in Fig. 1 lediglich schematisch angedeuteten gasförmigen Mediums 3. Ferner hat die Verbrennungskraftmaschine 1 wenigstens eine Brennkammer 4, welche mit dem Ladekompressor 2 strömungstechnisch verbunden ist. Ferner weist die Verbrennungskraftmaschine 1 wenigstens einen Dekompressor 5 zum Entspannen des von der Brennkammer 4 abströmenden heißen Rauchgases 6 und zum Erzeugen von Energie auf. Der Dekompressor 5 ist mit der Brennkammer 4 verbunden.

Wie in Fig. 1 gezeigt, ist der wenigstens eine Ladekompressor 2, nachfolgend vereinfachend Ladekompressor genannt, über eine zuführende Rohrleitung 7 mit der Brennkammer 4 verbunden; ferner ist die wenigstens eine Brennkammer 4, nachfolgend vereinfachend Brennkammer genannt, über eine abführende Rohrleitung 10 mit dem wenigstens einen Dekompressor 5, nachfolgend vereinfachend Dekompressor genannt, verbunden. Gemäß dem in der einzigen Figur gezeigten Ausführungsbeispiel sind die Rohrleitungen 7, 10 zumindest teilweise teilkreisförmig gekrümmt.

Erfindungsgemäß sind der Ladekompressor 2 sowie der Dekompressor 5 in Form einer Zahnradpumpe oder in Form eines Schraubenkompressors ausgebildet.

Ladekompressor 2 und Dekompressor 5 sind miteinander derart gekoppelt, dass der Dekompressor 5 zumindest einen Teil der von ihm erzeugten Energie an den Ladekompressor 2 abgibt. Diese Kopplung von Ladekompressor 2 und Dekompressor 5 ist elektrisch oder hydraulisch ausgebildet. In Fig. 1 ist die Kopplung zwischen Ladekompressor und Dekompressor mechanisch in Form einer Welle 11 dargestellt. Wie in Fig. 1 gezeigt, können die aus dem Dekompressor 5 austretende Welle und die in den Ladekompressor 2 eintretende Welle einstückig miteinander verbunden sein und insofern dieselbe Drehrichtung (siehe Pfeil A) haben. Gemäß einer anderen Ausführungsform ist es aber auch möglich, die genannten Wellen durch ein Getriebe miteinander zu verbinden. Die Drehrichtung der genannten Wellen kann dann unterschiedliche sein.

Es wird darauf hingewiesen, dass der Dekompressor 5 eine sogenannte umgedrehte Zahnradpumpe oder ein sogenannter umgedrehter Schraubenkompressor sein kann.

Wie die in Fig. 1 dargestellten Größenverhältnisse von Ladekompressor 2 und Dekompressor 5 andeuten, hat der Ladekompressor 2 eine kleinere Leistung als der Dekompressor 5. Ferner hat der Dekompressor 5, wie in Fig. 1 gezeigt, eine Abtriebswelle 12 zum Antreiben des nicht näher gezeigten Fahrzeugs, vorzugsweise eines Kraftfahrzeugs. Die Drehrichtung der Abtriebswelle 12 ist durch den Pfeil B angedeutet. Die mittels der Abtriebswelle 12 abgegebene und vom Dekompressor 5 erzeugte Energie ist deutlich größer als diejenige, welche zum Antrieb des Ladekompressors 2 erforderlich ist. Insofern ist die Nutzenergie, welche beispielsweise über die Abtriebswelle 12 abgegeben werden kann, größer als die für den Ladekompressor 2 beispielsweise über die Welle 11 abgegebene Antriebsenergie.

Gemäß einer weiteren, in Fig. 1 lediglich gestrichelt angedeuteten Ausführungsform der Erfindung ist zwischen den Ladekompressor 2 und die Brennkammer 4 ein Ladeluftkühler 13 geschaltet. Dieser dient dazu, das vom Ladekompressor verdichtete, gasförmige Medium 3, dessen Temperatur bei der Verdichtung angestiegen ist, abzukühlen, um dadurch pro Volumeneinheit des gasförmigen Mediums einen höheren Energieinhalt zu ermöglichen.

Üblicherweise erfolgt die Brennstoffzufuhr entlang des Pfeils C unmittelbar über eine Leitung 14 in die Brennkammer 4. Gemäß einer anderen, nicht näher gezeigten Ausführungsform der Erfindung erfolgt die Brennstoffzufuhr zu dem gasförmigen Medium vor dessen Eintritt in den Ladekompressor 2, so dass letzterer ein Zweiphasengemisch, nämlich ein Gemisch aus gasförmigem Medium und Brennstoff, verdichtet. Die Ansaugluft oder das vorgenannte Zweiphasengemisch tritt beispielsweise entlang des Pfeils D in den Ladekompressor 2 ein.

Gemäß einer anderen, in Fig. 1 lediglich gestrichelt angedeuteten Ausführungsform der Erfindung ist strömungstechnisch vor dem Dekompressor 5 ein Sedimentabscheider 15 zum Abscheiden von bei der Verbrennung anfallenden festen Bestandteilen in den Rauchgasen 6 angeordnet.

Gemäß einer anderen, bevorzugten Ausführungsform der Erfindung ist ein der Brennkammer 4 nachgeschalteter Kühler 16 vorgesehen. Dieser ist vorzugsweise, wie in Fig. 1 schematisch angedeutet, in den Dekompressor 5 integriert. So kann der Dekompressor 5 in dem Kühler 16 gekapselt sein; andererseits ist es auch möglich, das Kühlmedium, beispielsweise ein Öl, unmittelbar in den Dekompressor einzuleiten (nicht näher gezeigt).

Im Bereich der zuführenden Rohrleitung 7 ist ferner ein Anschluss vorgesehen, durch den mögliche Druckluft entlang des Pfeils E beispielsweise zum Starten des Prozesses in die Rohrleitung 7 einleitbar ist. Zum Starten kann die Druckluft auch direkt in die Brennkammer eingeleitet werden.

Nachfolgend wird die Arbeitsweise der erfindungsgemäßen Verbrennungskraftmaschine näher erläutert.

Das gasförmige Medium 3, z.B. Ansaugluft, tritt entlang des Pfeils D in den Ladekompressor 2 ein, wobei zum Starten auch Druckluft über dem Pfeil E in die zuführende Rohrleitung 7 einleitbar ist. Das komprimierte gasförmige Medium 3 strömt dann entlang des Pfeils F in die Brennkammer 4, in die über den Pfeil C und die Leitung 14 ferner Brennstoff eintritt. In der Brennkammer befindet sich ferner ein nicht näher gezeigter Reaktionsauslöser, beispielsweise eine Zündkerze, mittels der die Verbrennung eingeleitet wird. Die Verbrennung bewirkt eine Steigerung des Druckes. Das auf einem höheren Druckniveau sich befindende heiße Rauchgas strömt entlang des Pfeils G in den Dekompressor 5, in welchem eine Entspannung des komprimierten Rauchgases stattfindet. Die Abgase können entlang des Pfeils H aus dem Dekompressor 5 abgeführt werden. Ein Teil der von dem Dekompressor erzeugten Energie kann über die Welle 11 zum Antreiben des Ladekompressors 2 abgezweigt werden. Der Großteil der vom Dekompressor erzeugten Energie kann hingegen über die Abtriebswelle 12 abgeführt werden.

In der erfindungsgemäßen Brennkraftmaschine wird die Brennkammer durch Zwangsaufladung unter einen höheren Luftdruck gebracht, wobei eine Volumenvergrößerung der Luft durch die Kraftstoffverbrennung den vorgenannten weiteren Druckanstieg des Rauchgases bewirkt, mit dem der Dekompressor angetrieben wird, um Energie zu erzeugen. Der Zwangsaufladung mit Hilfe des Ladekompressors 2 steht die Zwangsentladung im Dekompressor gegenüber. Die erfindungsgemäße Brennkraftmaschine ist nicht so empfindlich gegen die bei der Verbrennung beispielsweise von Tetramethylsilan (TMS) anfallenden festen Bestandteile in den Abgasen, wie beispielsweise Kolbenmotoren. Durch die vorgenannte Druckluftzufuhr, d.h. durch die Tätigkeit des Ladekompressors, kann bei Behinderung des Brennkammerausgangs in der Brennkammer ein Überdruck erzeugt werden. Nach der Verbrennung wird der Dekompressor mit den komprimierten, sich auf einem höheren Druckniveau als das gasförmige Medium sich befindenden Rauchgasen beschickt. Das Betreiben der Verbrennungskraftmaschine 1 erfolgt nach der Zündung üblicherweise kontinuierlich, d.h. durch ständige Zufuhr von komprimierter Luft und Brennstoff kann in der Brennkammer eine strömende oder pulsierende Verbrennung stattfinden, die den Dekompressor kontinuierlich antreibt.

Die erfindungsgemäße Brennkraftmaschine hat ein geringes Leistungsgewicht, einen geringen Platzbedarf und einen geringen Eigenlaufwiderstand. Ferner weist sie geringe Herstellungskosten auf. Ihre Konstruktion ist für alle Brennstoffe auslegbar. Sie hat einen vibrationsarmen Lauf, eine geringe Geräuschentwicklung und eine kurze Kaltlaufphase. Durch unvollständigen Gaswechsel entstehen keine Verbrennungsverluste. Sie kann auch in kleinen Einheiten wirtschaftlich betrieben werden und hat gegenüber Turbinentriebwerken den Vorteil eines geringeren E-nergieeinsatzes, eines geringeren Luftdurchsatzes und einer geringeren Geräuschentwicklung. Da ein ständiger Überdruck erforderlich ist, kann eine Leistungskontrolle über eine Behinderung der Abgas- bzw. Rauchgasströmung erfolgen. Eine solche Behinderung der Abgasströmung kann zwischen der Brennkammer 4 und dem Dekompressor 5 oder strömungsseitig hinter dem Dekompressor erfolgen.

Damit ist eine Verbrennungskraftmaschine geschaffen, welche vorteilhafter betreib- oder handhabbar ist.

## Patentansprüche

1. Verbrennungskraftmaschine, insbesondere für Fahrzeuge wie Kraftfahrzeuge,
mit wenigstens einem Ladekompressor (2) zur Erhöhung des Druckes eines gasförmigen Mediums (3),
wenigstens einer mit dem wenigstens einen Ladekompressor (2) verbundenen Brennkammer (4) und
mit wenigstens einem mit der Brennkammer (4) verbundenen Dekompressor (5) zum Entspannen des von der Brennkammer (4) abströmenden heißen Rauchgases (6) und zum Erzeugen von Energie,
wobei der wenigstens eine Ladekompressor (2) und der wenigstens eine Dekompressor (5) in Form einer Zahnradpumpe oder in Form eines Schraubenkompressors ausgebildet sind, und
der wenigstens eine Ladekompressor (2) und der wenigstens eine Dekompressor (5) miteinander derart gekoppelt sind, dass der wenigstens eine Dekompressor (5) zumindest einen Teil der erzeugten Energie an den wenigstens einen Ladekompressor (2) abgibt,
**dadurch gekennzeichnet, dass** die Größenverhältnisse von wenigstens einem Ladekompressor (2) und wenigstens einem Dekompressor (5), so gewählt sind, dass
der wenigstens eine Ladekompressor (2) eine kleinere Leistung als der wenigstens eine Dekompressor (5) hat, und dass die Kopplung von wenigstens einem Ladekompressor (2) und wenigstens einem Dekompressor (5) elektrisch oder hydraulisch ausgebildet ist.

2. Verbrennungskraftmaschine nach Anspruch 1 oder 2, **dadurch gekennzeichnet, dass** zwischen den wenigstens einen Ladekompressor (2) und die wenigstens eine Brennkammer (4) ein Ladeluftkühler (13) geschaltet ist.

3. Verbrennungskraftmaschine nach einem der vorhergehenden Ansprüche, **dadurch gekennzeichnet, dass** die Brennstoffzufuhr zu dem gasförmigen Medium (3) vor dem wenigstens einen Ladekompressor (2) erfolgt.

4. Verbrennungskraftmaschine nach einem der vorhergehenden Ansprüche, **dadurch gekennzeichnet, dass** strömungstechnisch vor dem wenigstens einen Dekompressor (5) ein Sedimentabscheider (15) zum Abscheiden von bei der Verbrennung anfallenden festen Bestandteilen in den Rauchgasen (6) angeordnet ist.

5. Verbrennungskraftmaschine nach einem der vorhergehenden Ansprüche, **dadurch gekennzeichnet, dass** ein der Brennkammer (4) nachgeschalteter Kühler (16) vorgesehen ist, welcher vorzugsweise in den wenigstens einen Dekompressor (5) integriert ist.

6. Verbrennungskraftmaschine nach einem der vorhergehenden Ansprüche, **dadurch gekennzeichnet, dass** ein Anschluss vorzugsweise zwischen dem wenigstens einen Ladekompressor (2) und der Brennkammer (4) vorgesehen ist, durch den Druckluft zum Starten der Verbrennungskraftmaschine (1) in diese einleitbar ist.

7. Verbrennungskraftmaschine nach einem der vorhergehenden Ansprüche, **dadurch gekennzeichnet, dass** eine Behinderung der Abgasströmung am Brennkammerausgang oder zwischen der Brennkammer (4) und dem Dekompressor (5) oder strömungsseitig hinter dem Dekompressor (5) erfolgt.

## Claims

1. Internal combustion engine, in particular for vehicles such as automobiles, comprising at least one supercharger compressor (2) for increasing the pressure of a gaseous medium (3), at least one combustion chamber (4) connected to the at least one supercharger compressor (2), and at least one decompressor (5) connected to the combustion chamber (4) for decompressing the hot exhaust gas (6) flowing out of the combustion chamber (4) and for generating energy, wherein the at least one supercharger compressor (2) and the at least one decompressor (5) are configured in the form of a gear pump or in the form of a screw compressor, and the at least one supercharger compressor (2) and the at least one decompressor (5) are coupled to one another such that the at least one decompressor (5) supplies at least part of the energy generated to the at least one supercharger compressor (2), **characterised in that** the relative dimensions of at least one supercharger compressor (2) and at least one decompressor (5) are chosen so that the at least one supercharger compressor (2) has a smaller power output than the at least one decompressor (5), and that the coupling of at least one supercharger compressor (2) to at least one decompressor (5) is configured electrically or hydraulically.

2. Internal combustion engine according to claim 1, **characterised in that** a charging air cooler (13) is connected between the at least one supercharger compressor (2) and the at least one combustion chamber (4).

3. Internal combustion engine according to one of the preceding claims, **characterised in that** the fuel supply to the gaseous medium (3) takes place before the at least one supercharger compressor (2).

4. Internal combustion engine according to one of the preceding claims, **characterised in that** arranged before the at least one decompressor (5) in the flow direction is a sedimentation separator (15) for separating out from the exhaust gases (6) solid components that are produced during combustion.

5. Internal combustion engine according to one of the preceding claims, **characterised in that** arranged after the combustion chamber (4) is a cooler (16) which is preferably integrated into the at least one decompressor (5).

6. Internal combustion engine according to one of the preceding claims, **characterised in that** a connection is provided preferably between the at least one supercharger compressor (2) and the combustion chamber (4), through which compressed air can be fed into the internal combustion engine (1) to start said engine.

7. Internal combustion engine according to one of the preceding claims, **characterised in that** hindering of the exhaust gas flow takes place at the combustion chamber outlet or between the combustion chamber (4) and the decompressor (5) or, in the flow direction, after the decompressor (5).

## Revendications

1. Moteur à combustion interne, en particulier pour des véhicules comme des véhicules automobiles,
comprenant au moins un compresseur de chargement (2) pour augmenter la pression d'un milieu gazeux (3),
au moins une chambre de combustion (4) reliée audit au moins un compresseur de chargement (2), et
au moins un décompresseur (5) relié à la chambre de combustion (4) pour détendre les gaz brûlés chauds (6) qui s'écoulent en sortant de la chambre de combustion (4) et pour produire de l'énergie,
dans lequel ledit au moins un compresseur de chargement (2) et ledit au moins un décompresseur (5) sont couplés l'un à l'autre de telle façon que ledit au moins un décompresseur (5) fournit au moins une partie de l'énergie produite audit au moins un compresseur de chargement (2),
**caractérisé en ce que** les rapports de taille dudit au moins un compresseur de chargement (2) et dudit au moins un décompresseur (5) sont ainsi choisies que ledit au moins un compresseur de chargement (2) présente une plus faible puissance que ledit au moins un décompresseur (5), et **en ce que** le couplage dudit au moins un compresseur de chargement (2) et dudit au moins un décompresseur (5) est réalisé de manière électrique ou hydraulique.

2. Moteur à combustion interne selon la revendication 1, **caractérisé en ce qu'**un refroidisseur d'air de chargement (13) est branché entre ledit au moins un compresseur de chargement (2) et ladite au moins une chambre de combustion (4).

3. Moteur à combustion interne selon l'une des revendications précédentes, **caractérisé en ce que** l'alimentation de carburant vers le milieu gazeux (3) a lieu avant ledit au moins un compresseur de chargement (2).

4. Moteur à combustion interne selon l'une des revendications précédentes, **caractérisé en ce qu'**un séparateur à sédimentation (15) destiné à séparer les composants solides des gaz de combustion (16) apparaissant lors de la combustion est agencé dans le sens de l'écoulement avant ledit au moins un décompresseur (5).

5. Moteur à combustion interne selon l'une des revendications précédentes, **caractérisé en ce qu'**il est prévu un refroidisseur (16) branché à la suite de la chambre de combustion (4), qui est de préférence intégré dans ledit au moins un décompresseur (5).

6. Moteur à combustion interne selon l'une des revendications précédentes, **caractérisé en ce qu'**il est prévu un raccord de préférence entre ledit au moins un compresseur de chargement (2) et le moteur à combustion interne (4), à travers lequel de l'air comprimé peut être injecté dans le moteur à combustion interne (1) pour le démarrage de celui-ci.

7. Moteur à combustion interne selon l'une des revendications précédentes, **caractérisé en ce qu'**une gêne à l'écoulement des gaz d'échappement a lieu à la sortie de la chambre de combustion ou entre la chambre de combustion (4) et le décompresseur (5), ou encore derrière le décompresseur (5) dans le sens de l'écoulement.
